# EUROPEAN PATENT APPLICATION

(11) **EP 4 089 520 A1**
(43) Date of publication of application: **16.11.2022**
(21) Application number: 21744640.0
(22) Date of filing: 14.01.2021
(51) Int. Cl.: G06F 3/14, H04N 13/00

(54) **METHOD, APPARATUS, AND PRODUCT FOR DISPLAY**

(30) Priority: 20.01.2020 CN 202010073042
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2021/071704
(87) International publication number: WO 2021/147756

(57) **Abstract**

The present application relates to the technical field of display, and discloses a method for display, comprising: acquiring a user priority of a user; and performing pixel distribution for a viewpoint at which the user is located according to the user priority. The method for display is adopted to perform pixel distribution for the viewpoint at which the user is located according to the user priority, thereby realizing differentiated display for users, realizing diversity of display modes, and further improving display efficiency and display effect. The present application further discloses an apparatus and a product for display, a computer-readable storage medium, and a computer program product.

## Description

The present application claims priority to the Chinese Patent Application with an application number of 202010073042.3 and a title of *"*Method, Apparatus and Product for Display", filed to China National Intellectual Property Administration on January, 20th, 2020, the disclosures of which are hereby incorporated by reference.

### TECHNICAL FIELD

The present application relates to the technical field of display, and for example, relates to a method, an apparatus and a product for display.

### BACKGROUND

At present, when a display apparatus performs display, the display apparatus performs undifferentiated display for all users at a scene, i.e., the display apparatus will perform display for all the users at the scene in an undifferentiated way, and all the users at the scene can see contents displayed by the display apparatus.

In a process of implementing embodiments of the present disclosure, at least the following problems are found in related technologies:
A display mode that the display apparatus performs undifferentiated display for all the users at the scene is too single, which is bad for improvement of display efficiency and display effect.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a method, an apparatus and a product for display, a computer-readable storage medium, and a computer program product, to solve a technical problem that a display mode of performing undifferentiated display for all the users at the scene by a display apparatus is too single, which is bad for improvement of display efficiency and display effect.

The method for display provided by embodiments of the present disclosure comprises:
acquiring a user priority of a user; and
performing pixel distribution for a viewpoint at which the user is located according to the user priority.

In some embodiments, acquiring the user priority may comprise:
acquiring user information of the user; and
acquiring a user priority corresponding to the user information according to a corresponding relationship between the user information and the user priority.

In some embodiments, the user priority may also be preset.

In some embodiments, performing pixel distribution for a viewpoint at which the user is located according to the user priority may comprise:
determining user priorities of all users located at the viewpoint; and
distributing a pixel corresponding to the viewpoint to a user with the highest user priority.

In some embodiments, being located at the viewpoint may comprise: part or all of eyes of a user fall within a position range of the viewpoint.

In some embodiments, pixel distribution may also be performed for surrounding viewpoints of users located at the viewpoint according to the user priorities.

In some embodiments, the pixel distribution for surrounding viewpoints may comprise:
determining surrounding viewpoint priorities of the surrounding viewpoints relative to the eyes of the users located at the viewpoint; and
performing pixel distribution for the surrounding viewpoints according to the surrounding viewpoint priorities.

In some embodiments, determining surrounding viewpoint priorities of the surrounding viewpoints may comprise:
determining that the farther a surrounding viewpoint is from the user located at the viewpoint, the lower the surrounding viewpoint priority of the surrounding viewpoint is.

In some embodiments, the pixel distribution for surrounding viewpoints may comprise:
distributing pixels corresponding to the surrounding viewpoints to the users located at the viewpoint, when there is no user with a higher user priority at the surrounding viewpoints.

In some embodiments, when there is a user with a higher user priority at the surrounding viewpoints, the pixels corresponding to the surrounding viewpoints may also be distributed to the user with the higher user priority.

An apparatus for display provided by embodiments of the present disclosure comprises a processor and a memory storing program instructions; and the processor is configured to execute the above method for display when executing the program instructions.

The apparatus for display provided by embodiments of the present disclosure comprises:
an eye displacement sensor, configured to acquire a user priority of a user; and
a pixel processing module, configured to perform pixel distribution for a viewpoint at which the user is located according to the user priority.

In some embodiments, the eye displacement sensor may be configured to:
acquire user information of the user; and
acquire a user priority corresponding to the user information according to a corresponding relationship between the user information and the user priority.

In some embodiments, the eye displacement sensor may further be configured to:
preset the user priority.

In some embodiments, the pixel processing module may be configured to:
determine user priorities of all users located at the viewpoint; and
distribute a pixel corresponding to the viewpoint to a user with the highest user priority.

In some embodiments, being located at the viewpoint may comprise: part or all of eyes of a user fall within a position range of the viewpoint.

In some embodiments, the pixel processing module may further be configured to:
perform pixel distribution for surrounding viewpoints of users located at the viewpoint according to the user priorities.

In some embodiments, when performing pixel distribution for surrounding viewpoints, the eye displacement sensor may be configured to: determine surrounding viewpoint priorities of the surrounding viewpoints, relative to the eyes of the users located at the viewpoint. Optionally, the pixel processing module may be configured to: perform pixel distribution for the surrounding viewpoints according to the surrounding viewpoint priorities.

In some embodiments, the eye displacement sensor may be configured to:
determine that the farther a surrounding viewpoint is from the user located at the viewpoint, the lower the surrounding viewpoint priority of the surrounding viewpoint is.

In some embodiments, the pixel processing module may be configured to:
distribute pixels corresponding to the surrounding viewpoints to the users located at the viewpoint, when there is no user with a higher user priority at the surrounding viewpoints.

In some embodiments, the pixel processing module may further be configured to:
distribute, when there is a user with a higher user priority at the surrounding viewpoints, the pixels corresponding to the surrounding viewpoints to the user with the higher user priority.

In some embodiments, the eye displacement sensor may be a camera.

In some embodiments, the pixel processing module may be a data processing chip, or comprise a logic circuit.

A product for display provided by embodiments of the present disclosure comprises the above apparatus for display.

The computer-readable storage medium provided by the embodiments of the present disclosure stores computer-executable instructions; and the computer-executable instructions are configured to execute the above method for display.

The computer program product provided by the embodiments of the present disclosure comprises a computer program stored on the computer-readable storage medium; and the computer program comprises program instructions, and makes a computer execute the above method for display when the program instructions are executed by the computer.

The method, the apparatus and the product for display, the computer-readable storage medium, and the computer program product provided by the embodiments of the present disclosure may achieve the following technical effects:
The pixel distribution is performed for the viewpoint at which a user is located according to the user priority, to realize differentiated display for users, realize diversity of display modes, and further improve display efficiency and display effect.

The above general description and the following description are exemplary and explanatory only, and are not intended to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Fig. 1 is a flow chart of a method for display provided by embodiments of the present disclosure;
Fig. 2 is another flow chart of the method for display provided by embodiments of the present disclosure;
Fig. 3 is another flow chart of the method for display provided by embodiments of the present disclosure;
Fig. 4 is another flow chart of the method for display provided by embodiments of the present disclosure;
Fig. 5 is a schematic diagram of an apparatus for display provided by embodiments of the present disclosure;
Fig. 6 is a schematic diagram of another apparatus for display provided by embodiments of the present disclosure; and
Fig. 7 is a structural schematic diagram of a product for display provided by embodiments of the present disclosure.

Reference numerals:
500: apparatus for display; 510: processor; 520: memory; 530: communication interface; 540: bus; 610: eye displacement sensor; 620: pixel processing module; and 700: product for display.

### DETAILED DESCRIPTION

To understand features and technical contents of embodiments of the present disclosure in more detail, implementation of the embodiments of the present disclosure is described in detail below with reference to accompanying drawings; and the accompanying drawings are used for reference only, rather than limiting the embodiments of the present disclosure. In following technical description, for the convenience of explanation, a thorough understanding of the disclosed embodiments is provided through more details. However, one or more embodiments may be implemented without the details. In other cases, to simplify the accompanying drawings, well-known structures and apparatuses may be shown simplistically.

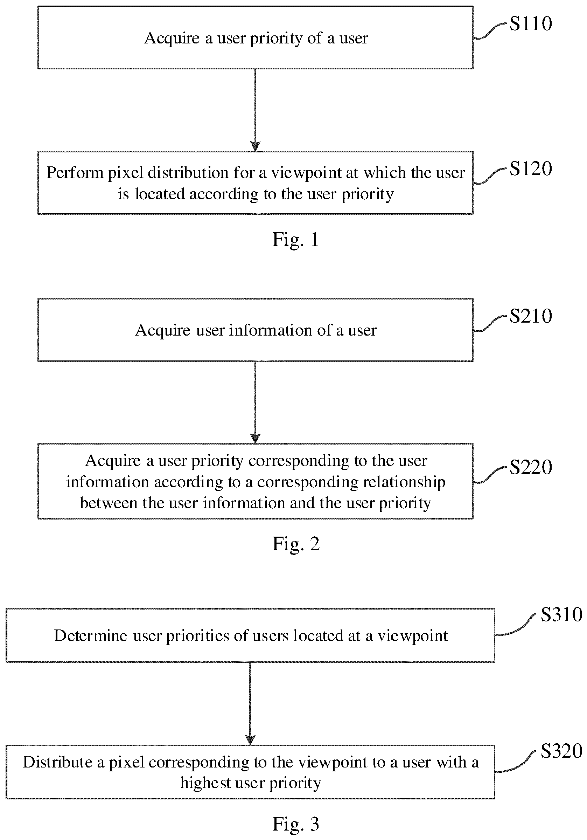

Referring to Fig. 1, embodiments of the present disclosure provide a method for display, comprising:
S110: acquiring a user priority of a user; and
S120: performing pixel distribution for a viewpoint at which the user is located according to the user priority.

Referring to Fig. 2, in some embodiments, acquiring the user priority may comprise:
S210: acquiring user information of the user; and
S220: acquiring a user priority corresponding to the user information according to a corresponding relationship between the user information and the user priority.

In some embodiments, the user information may be eye features of the user, such as eye images of the user. Optionally, the user information may also be other information available to effectively identify different users.

In some embodiments, the user priority may also be preset.

Referring Fig. 3, in some embodiments, performing pixel distribution for a viewpoint at which the user is located according to the user priority may comprise:
S310: determining user priorities of all users located at the viewpoint; and
S320: distributing a pixel corresponding to the viewpoint to a user with the highest user priority.

In some embodiments, being located at the viewpoint may comprise: part or all of eyes of a user fall within a position range of the viewpoint. Optionally, it may be determined that the user is located at the viewpoint when all the eyes of the user fall within the position range of the viewpoint, according to a preset strategy or actual situation; or, it is determined that the user is located at the viewpoint when part of the eyes of the user fall within the position range of the viewpoint.

In some embodiments, the pixel distribution may also be performed for surrounding viewpoints of users located at the viewpoint according to the user priorities. Thus, if the user moves to a surrounding viewpoint, the user may still be displayed.

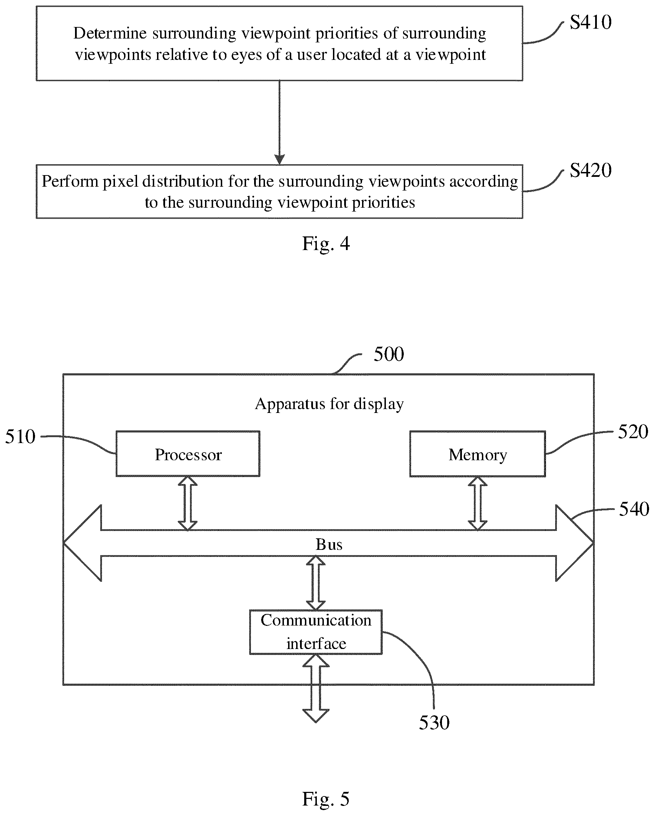

Referring Fig. 4, in some embodiments, the pixel distribution for surrounding viewpoints may comprise:
S410: determining surrounding viewpoint priorities of the surrounding viewpoints, relative to the eyes of the users located at the viewpoint; and
S420: performing pixel distribution for the surrounding viewpoints according to the surrounding viewpoint priorities.

In some embodiments, determining surrounding viewpoint priorities of the surrounding viewpoints may comprise:
determining that the farther a surrounding viewpoint is from the user located at the viewpoint, the lower the surrounding viewpoint priority of the surrounding viewpoint is.

In some embodiments, the pixel distribution for surrounding viewpoints may comprise:
distribute pixels corresponding to the surrounding viewpoints to the users located at the viewpoint, when there is no user with a higher user priority at the surrounding viewpoints.

In some embodiments, when there is a user with a higher user priority at the surrounding viewpoints, the pixels corresponding to the surrounding viewpoints may also be distributed to the user with the higher user priority. Thus, conflicts during pixel distribution for the users with different priorities can be avoided.

In some embodiments, after the pixel distribution is completed, subsequent display operations such as pixel rendering may further be performed.

In some embodiments, the priorities of the surrounding viewpoints can be flexibly determined according to the preset strategy or actual situation, as long as normal display can be performed for the users, and conflicts during pixel distribution for the users with different priorities can be avoided.

Embodiments of the present disclosure provide an apparatus for display, comprising a processor and a memory, storing program instructions; and the processor is configured to execute the above method for display when executing the program instructions.

In some embodiments, the display apparatus 500 has a structure as shown in Fig. 5, and comprises:
a processor 510 and a memory 520, and further comprises a communication interface 530 and a bus 540. The processor 510, the communication interface 530, and the memory 520 may communicate with each other through the bus 540. The communication interface 530 may be used for information transmission. The processor 510 may call the logic instructions in the memory 520, to execute the method for display in the above embodiments.

In addition, the logic instructions in the memory 520 may be implemented in the form of software functional units, and may be stored in a computer-readable storage medium when being sold or used as an independent product.

The memory 520, as a computer-readable storage medium, may be used for storing software programs and computer-executable programs, such as program instructions/modules corresponding to the methods in embodiments of the present disclosure. The processor 510 executes the function application and data processing by running the program instructions/modules stored in the memory 520, i.e., executes the method for display in embodiments of the above method.

The memory 520 may comprise a program storage region and a data storage region, wherein the program storage region may store an operating system and application programs required by at least one function; the data storage region may store data created according to the use of a terminal device, and the like. In addition, the memory 520 may comprise a high-speed random access memory (RAM), and may further comprise a nonvolatile memory (NVM).

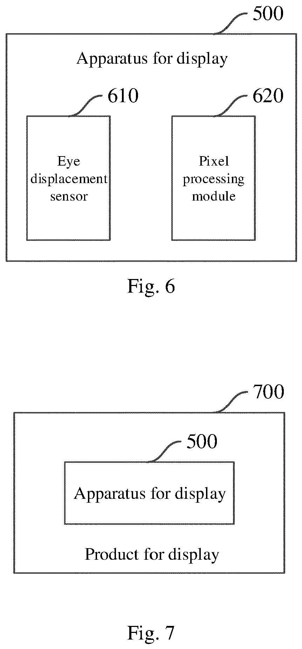

Referring to Fig. 6, embodiments of the present disclosure provide an apparatus 500 for display, comprising:
an eye displacement sensor 610, configured to acquire a user priority of a user; and
a pixel processing module 620, configured to perform pixel distribution for a viewpoint at which the user is located according to the user priority.

In some embodiments, the eye displacement sensor 610 may be configured to:
acquire user information of the user; and
acquire a user priority corresponding to the user information according to a corresponding relationship between the user information and the user priority.

In some embodiments, the user information may be eye features of the user, such as eye images of the user. Optionally, the user information may also be other information available to effectively identify different users.

In some embodiments, the eye displacement sensor 610 may further be configured to:
preset the user priority.

In some embodiments, the pixel processing module 620 may be configured to:
determine user priorities of all users located at the viewpoint; and
distribute a pixel corresponding to the viewpoint to a user with the highest user priority.

In some embodiments, being located at the viewpoint may comprise: part or all of eyes of a user fall within a position range of the viewpoint. Optionally, it may be determined that the user is located at the viewpoint when all the eyes of the user fall within the position range of the viewpoint, according to a preset strategy or actual situation; or, it is determined that the user is located at the viewpoint when part of the eyes of the user fall within the position range of the viewpoint.

In some embodiments, the pixel processing module 620 may further be configured to:
perform pixel distribution for surrounding viewpoints of users located at the viewpoint according to the user priorities. Thus, if the user moves to a surrounding viewpoint, the user may still be displayed.

In some embodiments, when performing pixel distribution for surrounding viewpoints, the eye displacement sensor 610 may be configured to: determine surrounding viewpoint priorities of the surrounding viewpoints, relative to the eyes of the users located at the viewpoint. Optionally, the pixel processing module 620 may be configured to: perform pixel distribution for the surrounding viewpoints according to the surrounding viewpoint priorities.

In some embodiments, the eye displacement sensor 610 may be configured to:
determine that the farther a surrounding viewpoint is from the user located at the viewpoint, the lower the surrounding viewpoint priority of the surrounding viewpoint is.

In some embodiments, the pixel processing module 620 may be configured to:
distributing pixels corresponding to the surrounding viewpoints to the users located at the viewpoint, when there is no user with a higher user priority at the surrounding viewpoints.

In some embodiments, the pixel processing module 620 may further be configured to:
distribute, when there is a user with a higher user priority at the surrounding viewpoints, the pixels corresponding to the surrounding viewpoints to the user with the higher user priority. Thus, conflicts during pixel distribution for the users with different priorities can be avoided.

In some embodiments, after the pixel distribution is completed, subsequent display operations such as pixel rendering may further be performed.

In some embodiments, the priorities of the surrounding viewpoints can be flexibly determined according to the preset strategy or actual situation, as long as normal display can be performed for the users, and conflicts during pixel distribution for the users with different priorities can be avoided.

In some embodiments, the eye displacement sensor 610 may be a camera. Optionally, the number of cameras can be one or more.

In some embodiments, the pixel processing module 620 may be a data processing chip, a single chip microcomputer or the like, or comprise a logic circuit, to realize the above corresponding functions.

Referring to Fig. 7, embodiments of the present disclosure provide a product 700 for display, comprising the above apparatus 500 for display.

In some embodiments, the product 700 for display may be a system for display embodied in the form of a server or the like. Optionally, the above product may comprise other control circuits, auxiliary circuits, structures and the like, to support normal operation of the apparatus 500 for display.

The method, the apparatus and the product for display provided by embodiments of the present disclosure are adopted to perform pixel distribution for the viewpoint at which the user is located according to the user priority, thereby realizing differentiated display for users, realizing diversity of display modes, and further improving display efficiency and display effect.

Embodiments of the present disclosure provide a computer-readable storage medium, storing computer-executable instructions; and the computer-executable instructions are configured to execute the above method for display.

Embodiments of the present disclosure provide a computer program product, comprising a computer program stored on the computer-readable storage medium; the computer program comprises program instructions; and when the program instructions are executed by a computer, the computer is allowed to execute the above method for display.

The computer-readable storage medium may be a transient computer-readable storage medium, and may also be a non-transient computer-readable storage medium.

The computer-readable storage medium and the computer program product provided by embodiments of the present disclosure are adopted to perform pixel distribution for a viewpoint at which a user is located according to a user priority, thereby realizing differentiated display for users, realizing diversity of display modes, and further improving display efficiency and display effect.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory (ROM), a random access memory (RAM), a diskette or an optical disk, and may also be a transient storage medium.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims. As used in the illustration of the embodiments and the claims, unless clearly indicated in the context, the singular forms "a", "an" and "the" are also intended to include the plural forms. Similarly, the term "and/or" as used in the present application is meant to include any and all possible combinations of one or more of the associated listings. In addition, when used in the present application, the term "comprise" and its variations "comprises" and/or "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the specific working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, can be implemented by special hardware-based systems that perform specified functions or actions, or implemented by combinations of special hardware and computer instructions.

## Claims

1. A method for display, comprising:
acquiring a user priority of a user; and
performing pixel distribution for a viewpoint at which the user is located according to the user priority.

2. The method according to claim 1, wherein acquiring the user priority comprises:
acquiring user information of the user; and
acquiring the user priority corresponding to the user information according to a corresponding relationship between user information and a user priority.

3. The method according to claim 2, further comprising:
presetting the user priority.

4. The method according to any one of claims 1-3, wherein performing pixel distribution for a viewpoint at which the user is located according to the user priority comprises:
determining user priorities of all users located at the viewpoint; and
distributing a pixel corresponding to the viewpoint to a user with a highest user priority.

5. The method according to claim 4, wherein being located at the viewpoint comprises: part or all of eyes of the user fall within a position range of the viewpoint.

6. The method according to claim 4, further comprising:
performing pixel distribution for surrounding viewpoints of the user located at the viewpoint according to the user priority.

7. The method according to claim 6, wherein performing pixel distribution for the surrounding viewpoints comprises:
determining surrounding viewpoint priorities of the surrounding viewpoints relative to eyes of the user located at the viewpoint; and
performing pixel distribution for the surrounding viewpoints according to the surrounding viewpoint priorities.

8. The method according to claim 7, wherein determining surrounding viewpoint priorities of the surrounding viewpoints comprises:
determining that the farther the surrounding viewpoint is from the user located at the viewpoint, the lower the surrounding viewpoint priority of the surrounding viewpoint is.

9. The method according to claim 7, wherein performing pixel distribution for the surrounding viewpoints comprises:
distributing pixels corresponding to the surrounding viewpoints to the user located at the viewpoint, when there is no user with a higher user priority at the surrounding viewpoints.

10. The method according to claim 9, further comprising:
distributing, when there is a user with a higher user priority at the surrounding viewpoints, pixels corresponding to the surrounding viewpoints to the user with a higher user priority.

11. An apparatus for display, comprising a processor and a memory storing program instructions, wherein the processor is configured to execute the method of any one of claims 1-10 when executing the program instructions.

12. An apparatus for display, comprising:
an eye displacement sensor, configured to acquire a user priority of a user; and
a pixel processing module, configured to perform pixel distribution for a viewpoint at which the user is located according to the user priority.

13. The apparatus according to claim 12, wherein the eye displacement sensor is configured to:
acquire user information of the user; and
acquire the user priority corresponding to the user information according to a corresponding relationship between user information and a user priority.

14. The apparatus according to claim 13, wherein the eye displacement sensor is further configured to:
preset the user priority.

15. The apparatus according to any one of claims 12-14, wherein the pixel processing module is configured to:
determine user priorities of all users located at the viewpoint; and
distribute a pixel corresponding to the viewpoint to a user with a highest user priority.

16. The apparatus according to claim 15, wherein being located at the viewpoint comprises: part or all of eyes of the user fall within a position range of the viewpoint.

17. The apparatus according to claim 15, wherein the pixel processing module is further configured to:
perform pixel distribution for surrounding viewpoints of the user located at the viewpoint according to the user priorities.

18. The apparatus according to claim 17, wherein when performing pixel distribution for the surrounding viewpoints,
the eye displacement sensor is configured to: determine surrounding viewpoint priorities of the surrounding viewpoints relative to eyes of the user located at the viewpoint;
the pixel processing module is configured to: perform pixel distribution for the surrounding viewpoints according to the surrounding viewpoint priorities.

19. The apparatus according to claim 18, wherein the eye displacement sensor is configured to:
determine that the farther the surrounding viewpoint is from the user located at the viewpoint, the lower the surrounding viewpoint priority of the surrounding viewpoint is.

20. The apparatus according to claim 18, wherein the pixel processing module is configured to:
distribute pixels corresponding to the surrounding viewpoints to the user located at the viewpoint, when there is no user with a higher user priority at the surrounding viewpoints.

21. The apparatus according to claim 20, wherein the pixel processing module is further configured to:
distribute, when there is a user with a higher user priority at the surrounding viewpoints, pixels corresponding to the surrounding viewpoints to the user with a higher user priority.

22. The apparatus according to claim 12, wherein the eye displacement sensor is a camera.

23. The apparatus according to claim 12, wherein the pixel processing module is a data processing chip, or comprises a logic circuit.

24. A product for display, comprising the apparatus of any one of claims 11-23.

25. A computer-readable storage medium, storing computer-executable instructions, wherein the computer-executable instructions are configured to execute the method of any one of claims 1-10.

26. A computer program product, comprising a computer program stored on a computer-readable storage medium, wherein the computer program comprises program instructions which, when executed by a computer, cause the computer to execute the method of any one of claims 1-10.
